# FASCICULE DE BREVET EUROPEEN

(11) **EP 0 423 045 B1**
(45) Date de publication et mention de la délivrance du brevet: **19.01.1994**
(21) Numéro de dépôt: 90420437.7
(22) Date de dépôt: 09.10.1990
(51) Int. Cl.: H01F 7/16, F16K 31/06

(54) **Electrovanne, notamment commandée par un signal électrique cyclique**
Elektromagnetisches Ventil, insbesondere gesteuert durch ein zyklisches elektrisches Signal
Electromagnetic valve, especially actuated by a cyclic electrical signal

(30) Priorité: 12.10.1989 FR 8913866
(43) Date de publication de la demande: 17.04.1991
(73) Titulaire: EATON S.A.M., MC-98000 Monaco (MC)
(72) Inventeur: Blaignon-Perbet, Patrick, F-06150 Cannes La Bocca (FR); Souquet, Jacques, F-06100 Nice (FR); Dragoni, Chistian, F-06390 Bendejun (FR)
(74) Mandataire: Bratel, Gérard

(56) Documents cités:
- EP-A- 0 055 518
- FR-A- 1 157 226
- US-A- 4 326 696

## Description

La présente invention concerne une électrovanne commandée par un signal électrique cyclique.

Plus particulièrement, cette électrovanne appartient au genre connu comprenant un corps muni d'au moins une entrée et d'au moins une sortie de fluide, un siège solidaire du corps, une bobine alimentée par le signal électrique qui est montée autour d'une carcasse et qui est elle-même entourée par un circuit magnétique externe, un noyau fixe inséré dans la carcasse et un noyau mobile déplaçable entre une position d'application contre le siège et une position écartée de ce siège, le noyau mobile étant soumis à l'action d'un ressort de rappel, le noyau mobile comprenant une première partie évidée de plus grande section qu'une deuxième partie, la première partie coopérant avec le siège pour remplir la fonction d'obturateur et traversant le circuit magnétique externe en définissant un entrefer constant, tandis que la deuxième partie, de section plus petite que celle de la première partie, est tournée vers le noyau fixe et définit un entrefer variable avec ce noyau fixe, l'entrefer constant étant de grande surface comparé à la section de l'entrefer variable.

Dans une telle électrovanne, le noyau mobile est repoussé par le ressort de rappel contre le siège, en position de repos, pour faire office d'obturateur ; lorsque la bobine est alimentée, le noyau mobile est attiré magnétiquement vers le noyau fixe et il s'écarte du siège laissant ainsi le passage au fluide de manière à mettre en communication au moins une entrée de fluide avec au moins une sortie de fluide. Cette électrovanne est conçue pour être alimentée électriquement par un signal cyclique, sous forme d'impulsions rectangulaires de fréquence fixe mais à rapport cyclique variable de façon continue, pour obtenir une réponse (par exemple en débit de fluide) proportionnelle à une grandeur d'entrée, ce mode d'action étant bien connu en soi - voir à ce sujet par exemple le document EP-A-0055518.

La structure d'une électrovanne selon le préambule de la revendication 1 est connue par le document US-A-4326696. Toutefois, dans la réalisation selon ce document, la partie de plus petite section du noyau mobile est de faible longueur, comparée avec la partie de plus grande section, et cette partie de plus petite section sert seulement à loger une extrémité du ressort de rappel. Ainsi la partie de plus petite section n'assure aucune fonction de guidage du noyau mobile.

Le but de l'invention est d'améliorer ce genre d'électrovanne, notamment en ce qui concerne la fonction de guidage du noyau mobile, importante en raison des mouvements à fréquence élevée de ce noyau dus au fonctionnement cyclique.

A cet effet, dans l'électrovanne objet de la présente invention et commandée par un signal électrique cyclique, la deuxième partie du noyau mobile possède une longueur importante par rapport à celle de la première partie et cette deuxième partie est montée coulissante dans un organe de guidage fixe distinct de la carcasse.

Dans le cas d'une électrovanne à symétrie de révolution, la première partie du noyau mobile est une partie cylindrique de grand diamètre, coopérant avec le siège qui est de forme annulaire, et la deuxième partie du noyau mobile est une partie cylindrique de plus petit diamètre que la précédente, et de longueur importante par rapport à son propre diamètre, montée coulissante dans l'organe de guidage fixe qui est en forme de douille.

L'électrovanne est ainsi caractérisée par un noyau mobile de conformation particulière, dans lequel on distingue deux parties, à savoir : une partie magnétiquement active, longue et de petite section donc définissant un entrefer variable de petite section, et une partie magnétiquement inactive, évidée et de grande section, qui sert à fermer le circuit magnétique en définissant un entrefer constant avec le restant du circuit magnétique. Cette disposition permet :
a) de par le rapport élevé entre la surface de l'entrefer constant et la section de l'entrefer variable, de minimiser les pertes magnétiques ;
b) en raison du petit diamètre de la partie active, et de l'évidement de la partie de grand diamètre, de minimiser la masse du noyau mobile ;
c) en raison du rapport élevé entre la longueur de la partie de petit diamètre et ce même diamètre, d'avoir un guidage optimum du noyau mobile, cette partie constituant une véritable tige de guidage pour le noyau mobile.

Ces trois caractéristiques combinées permettent de diminuer les temps d'ouverture et de fermeture de l'électrovanne, donc de pouvoir faire fonctionner l'électrovanne à une fréquence plus élevée, apte à réduire l'ondulation de la pression à la sortie de fluide de cette électrovanne.

Selon une caractéristique complémentaire de l'invention, le noyau fixe de l'électrovanne comporte une partie réglable, pouvant être rapprochée ou éloignée du siège. Dans une forme de réalisation particulière, le noyau fixe est de conformation tubulaire et comporte un taraudage recevant un noyau central réglable pourvu d'un filetage extérieur. Le noyau central réglable comporte avantageusement une tête de manoeuvre, accessible depuis l'extérieur et prévue pour le vissage ou le dévissage du noyau central réglable relativement au noyau fixe à l'aide d'un outil approprié, tel que tournevis.

Deux utilisations sont possibles pour ce noyau réglable :
a) une première utilisation est le réglage précis de l'entrefer variable, nécessaire au fonctionnement à fréquence élevée et impossible à obtenir directement au montage ;
b) une seconde utilisation est le réglage de la course du noyau mobile, donc du degré d'ouverture de l'électrovanne, qui lui-même détermine le passage de fluide entre le siège et le noyau mobile ; on peut ainsi contrôler avec précision la pression à la sortie de l'électrovanne.

Selon une disposition avantageuse, le noyau central réglable est appuyé sur l'organe de guidage fixe, pour le réglage initial de la position dudit organe de guidage, ce dernier servant de butée de fin de course pour le noyau mobile. Le déplacement du noyau mobile, ainsi déterminé par la position de l'organe de guidage (douille), est prévu de préférence inférieur à l'entrefer variable, de sorte que ce dernier ne s'annule jamais au cours du fonctionnement, ce qui est favorable pour un fonctionnement à fréquence élevée.

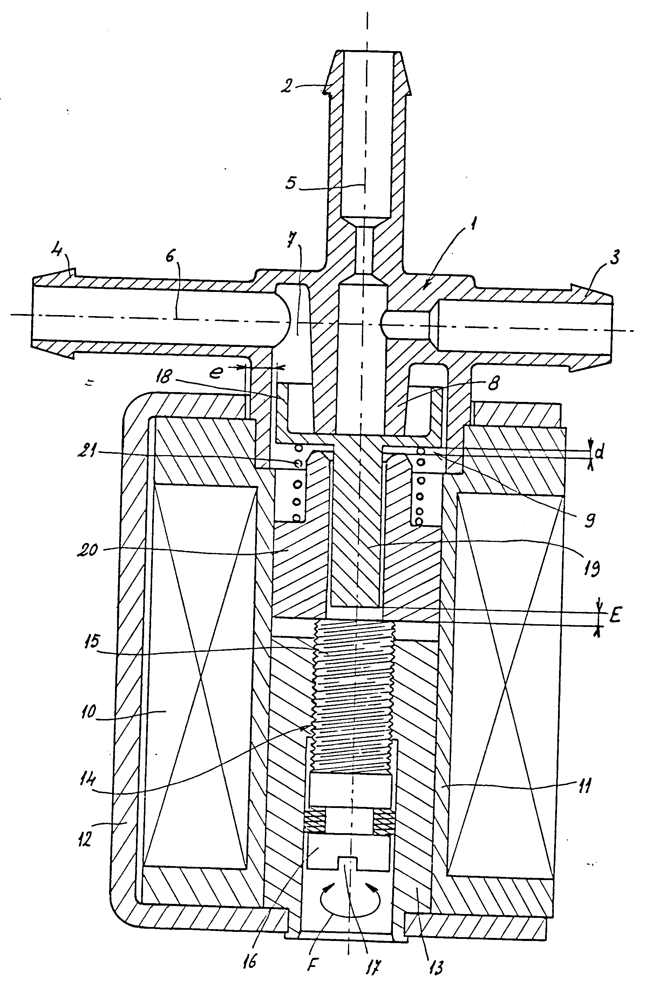

De toute façon, l'invention sera mieux comprise à l'aide de la description qui suit, en référence au dessin schématique annexé représentant, à titre d'exemple non limitatif, une forme d'exécution de cette électrovanne.

La figure unique du dessin représente une électrovanne conforme à la présente invention, vue en coupe longitudinale, dans sa position de repos.

Dans l'exemple représenté, il s'agit d'une électrovanne à trois voies, qui possède un corps 1 muni de trois embouts 2,3 et 4, avec un premier embout 2 orienté suivant l'axe général 5 de l'électrovanne, et deux autres embouts 3 et 4 disposés suivant un même axe 6, perpendiculaire à l'axe général 5, les embouts 2 et 3 étant en communication permanente l'un avec l'autre. Le corps 1 de l'électrovanne délimite une chambre intérieure 7, et une partie de ce corps 1 forme, à l'intérieur de la chambre 7, un siège annulaire 8 prévu pour coopérer avec une partie d'un noyau mobile 9, déplaçable suivant l'axe 5.

L'ensemble d'actionnement de l'électrovanne comprend une bobine 10 enroulée autour d'une carcasse 11, et entourée par un circuit magnétique externe 12. Un noyau fixe 13, de conformation tubulaire, est inséré dans la carcasse 11. Le noyau fixe 13 comporte un taraudage, pour le montage d'un noyau central réglable 14 qui est pourvu extérieurement d'un filetage 15. Le noyau réglable 14 comporte encore une tête de manoeuvre 16, accessible depuis l'extérieur et présentant par exemple une fente diamétrale 17 pour sa mise en rotation selon la flèche F à l'aide d'un tournevis. Ce noyau réglable 14 peut être ainsi déplacé dans la direction de l'axe 5, par vissage ou dévissage relativement au noyau fixe 13.

Le noyau mobile 9 comprend, du côté tourné vers le siège 8, une première partie cylindrique 18 évidée et de grand diamètre (par rapport à une deuxième partie définie ci-après), et du côté tourné vers les noyaux fixe 13 et réglable 14, une deuxième partie cylindrique 19 plus longue et de plus petit diamètre que la première partie 18. La partie 19 de petit diamètre est montée coulissante, suivant l'axe 5, dans une douille de guidage fixe 20 solidaire de la carcasse 11. Un ressort de rappel hélicoïdal 21 est comprimé entre un épaulement de la douille de guidage 20, d'une part, et la partie 18 évidée et de grand diamètre du noyau mobile 9, d'autre part.

La conformation particulière du noyau mobile 9 définit, dans la position de repos montrée au dessin, un entrefer E de petite section entre la deuxième partie 19 de ce noyau mobile 9 et la face terminale du noyau réglable 14, l'entrefer E étant variable. Un autre entrefer constant e, et de grande section, est défini entre la surface latérale de la première partie 18 du même noyau mobile 9 et la partie du circuit magnétique externe 12 située en regard de cette première partie 18.

Au repos, le ressort de rappel 21 repousse la première partie 18 du noyau mobile 9 contre le siège 8 du corps 1 ; la partie 18 joue alors le rôle d'obturateur, en isolant l'embout 4 des deux autres embouts 2 et 3.

Lorsqu'on alimente la bobine 10, le noyau mobile 9 est attiré par le noyau réglable 14. Ainsi, le noyau mobile 9 se déplace selon l'axe 5, à l'encontre de la force du ressort 21, de sorte que sa partie 18 de grand diamètre s'écarte du siège 8. L'embout 4 est alors mis en communication avec les deux autres embouts 2 et 3.

L'électrovanne précédemment décrite est conçue pour avoir sa bobine 10 alimentée par un signal électrique de fréquence fixe, en forme d'impulsions rectangulaires. En faisant varier de façon continue le rapport cyclique de ce signal, on fait varier de façon continue la pression présente à l'embout 3 par exemple, en obtenant ainsi une réponse proportionnelle à une certaine information de commande.

Le vissage du noyau réglable 14 permet le réglage de l'entrefer variable E. Au montage, la douille de guidage 20 est emmanchée en force dans la carcasse 11, jusqu'au contact avec le noyau fixe 13. Après montage du noyau réglable 14, on règie l'entrefer E en vissant le noyau réglable 14 qui pousse la douille de guidage 20, mais on ne peut pas revenir en arrière.

Le noyau réglable 14 permet de régler ainsi l'entrefer variable E à une valeur précise ; un tel réglage est nécessaire pour le fonctionnement de l'électrovanne à une fréquence élevée, et il est impossible à obtenir directement au montage. Par ailleurs, la position réglée du noyau 14 et de la douille 20 détermine la course du noyau mobile 9, donc le degré d'ouverture de l'électrovanne, correspondant au passage de fluide entre le siège 8 et la partie 18 du noyau mobile 9. On peut ainsi contrôler avec précision la pression sur l'embout 3, quand l'électrovanne est ouverte. La course du noyau mobile 9 est déterminée par la venue en butée de sa partie 19 contre la douille 20, donc par la cote indiquée d sur la figure, qui est inférieure à l'entrefer variable E. Il en résulte que cet entrefer variable E ne s'annule jamais au cours du fonctionnement, ce qui est favorable au fonctionnement à haute fréquence.

L'électrovanne objet de l'invention est notamment destinée à des fonctions de contrôle dans des circuits pneumatiques, et elle possède des applications aussi bien en pression qu'en dépression d'air. Cette électrovanne est applicable par exemple au contrôle proportionnel de vérins pneumatiques, en ce qui concerne la force ou le déplacement des vérins, et plus généralement au contrôle proportionnel de tout débit d'air.

## Revendications

1. Electrovanne avec un corps (1) muni d'au moins une entrée et d'au moins une sortie de fluide (2,3,4), un siège (8) solidaire du corps (1), une bobine (10) alimentée par le signal électrique qui est montée autour d'une carcasse (11) et qui est elle-même entourée par un circuit magnétique externe (12), un noyau fixe (13,14) inséré dans la carcasse (11) et un noyau mobile (9) déplaçable entre une position d'application contre le siège (8) et une position écartée de ce siège (8), le noyau mobile (9) étant soumis à l'action d'un ressort de rappel (21), le noyau mobile (9) comprenant une première partie (18) évidée de plus grande section qu'une deuxième partie (19), la première partie (18) coopérant avec le siège (8) pour remplir la fonction d'obturateur et traversant le circuit magnétique externe (12) en définissant un entrefer constant (e), tandis que la deuxième partie (19), de section plus petite que celle de la première partie (18), est tournée vers le noyau fixe (13,14) et définit un entrefer variable (E) avec ce noyau fixe (13,14), l'entrefer constant (e) étant de grande surface comparé à la section de l'entrefer variable (E), caractérisée en ce que l'électrovanne est commandée par un signal électrique cyclique, en ce que la deuxième partie (19) du noyau mobile (9) possède une longueur importante par rapport à celle de la première partie (18) et en ce que cette deuxième partie (19) est montée coulissante dans un organe de guidage fixe (20) distinct de la carcasse (11).

2. Electrovanne selon la revendication 1, caractérisée en ce que la première partie (18) du noyau mobile (9) est une partie cylindrique de grand diamètre, coopérant avec le siège (8) qui est de forme annulaire, et la deuxième partie (19) du noyau mobile (9) est une partie cylindrique de plus petit diamètre que la précédente, et de longueur importante par rapport à son propre diamètre, montée coulissante dans l'organe de guidage fixe (20) qui est en forme de douille.

3. Electrovanne selon la revendication 1 ou 2, caractérisée en ce que le noyau fixe (13) comporte une partie réglable (14), pouvant être rapprochée ou éloignée du siège (8).

4. Electrovanne selon la revendication 3, caractérisée en ce que la partie réglable (14) à la forme d'un noyau central pourvu d'un filetage extérieur (15) et en ce que le noyau fixe (13) est de conformation tubulaire et comporte un taraudage recevant le noyau central réglable (14).

5. Electrovanne selon la revendication 4, caractérisée en ce que le noyau central réglable (14) comporte une tête de manoeuvre (16), accessible depuis l'extérieur et prévue pour le vissage ou le dévissage du noyau central réglable (14) relativement au noyau fixe (13) à l'aide d'un outil, tel que tournevis.

6. Electrovanne selon la revendication 4 ou 5, caractérisée en ce que le noyau central réglable (14) est appuyé sur l'organe de guidage fixe (20), pour le réglage initial de la position dudit organe de guidage (20), ce dernier servant de butée de fin de course pour le noyau mobile (9).

7. Electrovanne selon la revendication 6, caractérisée en ce que le déplacement (d) du noyau mobile (9), déterminé par la position de la douille de guidage (20), est inférieur à l'entrefer variable (E) de sorte que ce dernier ne s'annule jamais au cours du fonctionnement.

## Patentansprüche

1. Magnetventil mit einem Gehäuse (1) mit wenigstens einem Eingang und wenigstens einem Ausgang (2,3,4) für ein Medium, ferner mit einem mit dem Gehäuse (1) fest verbundenen Sitz (8), mit einer Spule (10), die von dem elektrischen Signal versorgt wird und die um einen Unterbau (11) angeordnet ist, der seinerseits von einen äußeren magnetischen Kreis (12) umgeben ist, wobei ein fester Kern (13,14) in den Unterbau (11) eingesetzt ist, wobei ferner ein beweglicher Kern (9) vorgesehen ist, der zwischen einer Lage beweglich ist, in der er am Sitz (8) anliegt, und einer anderen Lage entfernt von dem Sitz (8), wobei der bewegliche Kern (9) der Einwirkung einer Rückholfeder (21) unterworfen ist, wobei fernerhin der bewegliche Kern (9) einen ersten Teil (18) aufweist, der einen Leerraum mit größerem Querschnitt hat als ein zweiter Teil (19), wobei der erste Teil (18) mit dem Sitz (8) zusammenarbeitet, um die Funktion eines Verschlußelements auszuüben und den magnetischen äußeren Kern (12) durchquert, wobei ein konstanter Spalt (e) definiert wird, während der zweite Teil (19) mit kleinerem Querschnitt als derjenige des ersten Teils (18) zum festen Kern (13,14) gewendet ist und einen variablen Spalt (E) mit dem festen Kern (13,14) ausbildet, wobei der konstante Spalt (e) eine große Fläche hat verglichen mit dem Querschnitt des variablen Spalts (E),
**dadurch gekennzeichnet,**
daß das Magnetventil von einem zyklischen elektrischen Signal gesteuert ist, daß der zweite Teil (19) des beweglichen Kerns (9) bezogen auf die Länge des ersten Teils (18) eine bedeutende Länge aufweist, und daß der zweite Teil (18) gleitend in einem festen Führungsorgan (20) montiert ist, das vom Unterbau (11) getrennt ausgebildet ist.

2. Magnetventil nach Anspruch 1,
**dadurch gekennzeichnet,**
daß der erste Teil (18) des beweglichen Kerns (9) ein zylindrisches Teil mit großem Durchmesser ist, das mit dem Sitz (8) zusammenarbeitet, der eine Ringform hat und daß der zweite Teil (19) des beweglichen Kerns (9) ein zylindrisches Teil mit kleinerem Durchmesser als der erste Teil ist, bezogen auf seinen eigenen Durchmesser -eine bedeutende Länge hat und gleitend im festen Führungsorgan (20) montiert ist, das die Form einer Buchse hat.

3. Magnetventil nach Anspruch 1 oder 2,
**dadurch gekennzeichnet,**
daß der feste Kern (13) einen einstellbaren Teil (14) hat, der vom Sitz (8) entfernt oder ihm angenähert werden kann.

4. Magnetventil nach Anspruch 3,
**dadurch gekennzeichnet,**
daß der einstellbare Teil (14) die Form eines mittleren Kerns hat, der mit einem Außengewinde (15) versehen ist und daß der feste Kern (13) rohrförmig ausgebildet ist und ein Innengewinde hat, das den einstellbaren mittleren Teil (14) aufnimmt.

5. Magnetventil nach Anspruch 4,
**dadurch gekennzeichnet,**
daß der einstellbare mittlere Teil (14) einen Betätigungskopf (16) aufweist, der von außen her zugänglich ist und der zum Festschrauben oder Losschrauben des einstellbaren mittleren Teils relativ zum festen Kern (13) ausgebildet ist, und zwar mit Hilfe eines Werkzeugs, beispielsweise eines Schraubendrehers.

6. Magnetventil nach Anspruch 4 oder 5,
**dadurch gekennzeichnet,**
daß der einstellbare mittlere Teil (14) am festen Führungsorgan (20) anliegt, und zwar zwecks anfänglicher Einstellung der Position des Führungsorgans, das als Endanschlag für den beweglichen Kern (9) dient.

7. Magnetventil nach Anspruch 6,
**dadurch gekennzeichnet,**
daß die Verschiebung (d) des beweglichen Kerns (9), die von der Position der Führungsbuchse (20) bestimmt ist, kleiner ist als der variable Spalt (E) derart, daß dieser während des Betriebs niemals gleich Null wird.

## Claims

1. Solenoid valve with a body (1) provided with at least fluid inlet and at least one fluid outlet (2, 3, 4), a seat (8) integral with the body (1), a coil (10) powered by the electrical signal and which is mounted around a frame (11) and is itself surrounded by an external magnetic circuit (12), a fixed core (13, 14) inserted in the frame (11) and a moving core (9) movable between a position in which it is pressed against the seat (8) and a position in which it is separated from this seat (8), the moving core (9) being subjected to the action of a return spring (21), the moving core (9) comprising a first hollowed-out part (18) with a larger cross section than a second part (19), the first part (18) cooperating with the seat (8) so as to fulfil the function of a seal and passing through the external magnetic circuit (12) whilst defining a constant air gap (e), whereas the second part (19), with a cross section smaller than that of the first part (18), is oriented towards the fixed core (13, 14) and defines a variable air gap (E) with this fixed core (13, 14), the constant air gap (e) having a large surface area compared with the cross section of the variable air gap (E), characterised in that the solenoid valve is controlled by a cyclical electrical signal, in that the second part (19) of the moving core (9) is long compared with the first part (18), and in that this second part (19) is mounted so as to slide in a fixed guide member (20) separate from the frame (11).

2. Solenoid valve according to Claim 1, characterised in that the first part (18) of the moving core (9) is a large-diameter cylindrical part cooperating with the seat (8), which is annular in shape, and the second part (19) of the moving core (9) is a cylindrical part with a smaller diameter than the previous one, and of great length compared with its own diameter, mounted so as to slide in the fixed guide member (20), which is in the form of a sleeve.

3. Solenoid valve according to Claim 1 or 2, characterised in that the fixed core (13) has an adjustable part (14), which can be moved towards or away from the seat (8).

4. Solenoid valve according to Claim 3, characterised in that the adjustable part (14) is in the form of a central core provided with an external thread (15) and in that the fixed core (13) is tubular in shape and has a female thread receiving the adjustable central core (14).

5. Solenoid valve according to Claim 4, characterised in that the adjustable central core (14) has a manoeuvring head (16), accessible from the outside and provided for screwing or unscrewing the adjustable central core (14) relatively to the fixed core (13) by means of a tool such as a screwdriver.

6. Solenoid valve according to Claim 4 or 5, characterised in that the adjustable central core (14) is pressed against the fixed guide member (20) for the initial adjustment of the position of the said guide member (20), the latter serving as an end-of-travel stop for the moving core (9).

7. Solenoid valve according to Claim 6, characterised in that the movement (d) of the moving core (9), determined by the position of the guide sleeve (20), is less than the variable air gap (E), so that the latter never disappears during operation.
